# FASCICULE DE BREVET EUROPEEN

(11) **EP 0 931 517 B1**
(45) Date de publication et mention de la délivrance du brevet: **28.12.2005**
(21) Numéro de dépôt: 98500185.8
(22) Date de dépôt: 31.07.1998
(51) Int. Cl.: A61C 3/14

(54) **Pince dentaire pour l'extraction des molaires supèrieures du fond**
Zahnärztliche Zange zum Ziehen von oberen hinteren Backenzähnen
Dental forceps for extracting the upper back molars

(30) Priorité: 27.01.1998 ES 9800147
(43) Date de publication de la demande: 28.07.1999
(73) Titulaire: Corporacion O.I.B., S.L., 09003 Burgos (ES)
(72) Inventeur: Rodriguez del Val, José Maria, 09003 Burgos (ES)
(74) Mandataire: Urizar Anasagasti, Jesus Maria

(56) Documents cités:
- DE-C- 846 000
- DE-U- 8 714 211
- US-A- 2 497 254
- US-A- 2 592 641
- US-A- 3 754 331
- CARL MARTIN SOLINGEN DENTAL KATALOG NO. 8,

## Description

La présente invention, qui consiste en un forceps en baïonnette, dont la partie active termine par deux extrémités (pales) pointues, à section semi-lunaire en diminution progressive, jusqu'à finir par deux pointes et en forme arrondie et symétrique avec l'aspect de deux cornes de taureau, qui introduites entre le deuxième et troisième molaire supérieurs, étant ce dernier totalement ou partiellement eruptionné, situé en ligne avec l'arcade ou déplacé vers le vestibule ou palais et avec sa couronne intègre ou plus ou moins détruite, produit en s'activant une luxation du dernier molaire ou reste radiculaire vers distal avec le conséquent relâchement et élévation, ce qui permet être pris avec le forceps conventionnel et extrait avec douceur et sûreté.

Une multitude de forceps dentaires sont connus pour faire prise et mouvoir les pièces dentaires, et d'élévateurs pour le même but, en s'introduisant entre deux pièces ou racines et/ou entre celles ci et l'os maxillaire.

Les forceps sont des pincettes, formées par une partie passive pour manipuler avec la main, une charnière et une partie active qui attrape la pièce.

Les élévateurs sont une sorte de levier ou poinçons droits ou angulés, en forme de pointe ou aiguilles; avec du tranchant droit, courbe, ou en forme de lance; laminés ou striés, de differentes longueurs et à manche en formes diverses pour sa manipulation.

Les forceps pour pièces dentaires supérieures sont droits ou avec différentes courbatures de ses parties passives et actives ou bien, pour les molaires postérieurs, avec partie active contreangulée en baïonnette pour faciliter la prise sans forcer ou nuire les lèvres ou commissures buccales.

Le cas que nous proposons est l'extraction du troisième molaire supérieur ou de sagesse.

Dans certaines occasions il y a des difficultés pour faire prise en lui avec un forceps en baïonnette conventionnel, car la couronne du molaire serait dans une position très postérieure, peu eruptionnée, déplacée vers le vestibule ou palais, ou plus ou moins détruite; ce qui amène sa fracture au moment de faire prise en lui.

Autres fois, malgré qu'on peut faire prise en lui, les grandes racines courbées lui donnent une force difficile à vaincre et c'est très difficile à déplacer avec risque de les casser.

L 'application d'un élévateur pour essayer de le relâcher ou luxer est aussi très difficile dans cette profondeur de la bouche et nous courrons le risque de produire des déchirures, perforations du sein maxillaire ou même pousser vers ce sein au lieu d'élever certains restes radiculaires ou bien de provoquer une luxation trop grande de la pièce ou racine et provoquer son arrachement total avec chute à l'oro-faringe et possible déglutition de la même.

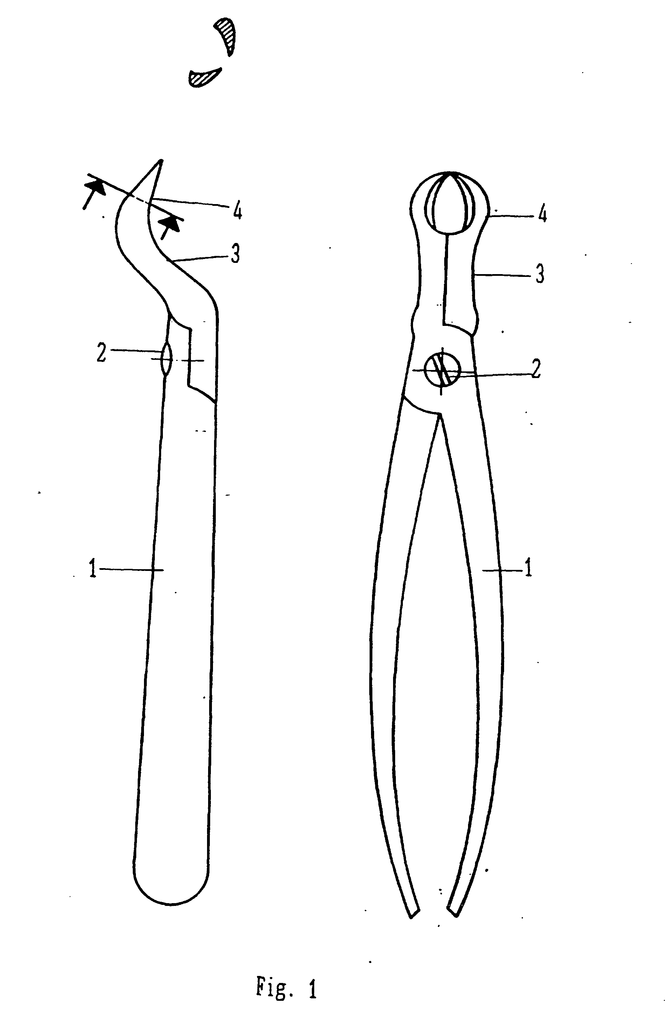

Le forceps élévateur en baïonnette corne supérieur, pour la luxation du troisième molaire ou reste radiculaire ou du dernier molaire ou reste radiculaire des deux extrémités distales (postérieures) de l'arcade supérieure, de la présente invention a été représenté en détail dans la figure du plan annexe, qui montre les deux vues d'une réalisation préférentielle de cet outil.

Ce forceps a une partie passive (1) et sa charnière (2) conventionnelle et une partie active contreangulée en baïonnette (3) qui termine en deux extrémités (pales activas) (4) qui se courbent progressivement symétriquement en arc de cercle et dont la section va en diminution jusqu'à finir en deux pointes qui s'approchent l'une de l'autre et qui lui donnent l'aspect d'une paire de cornes de taureau, avec le forceps en position fermée.

Ces pointes peuvent s' introduire entre le deuxième et troisième molaire supérieur; étant ce dernier totalement ou partiellement erupté, sa couronne étant en ligne avec l 'arcade ou déviée latéralement vers le vestibule ou vers le palais et même avec la dite couronne intègre ou plus ou moins détruite par des caries ou des fractures; et produit en s'activant le déracinement et luxation vers distal (arrière) et le conséquent relâchement et élévation du molaire ou du reste radiculaire pour qu'ils puisse être attrapé facilement par un forceps conventionnel et extrait avec douceur.

Cet outil sera fabriqué avec un matériau suffisamment résistant, métallique, plastique ou céramique.

La section idéale pour qu'ils puisse s'insinuer entre les molaires, est du type semi-lunaire avec une arrête vers intérieur, qui facilite, une face antérieure convexe et une autre concave, pour accueillir et diriger la couronne du molaire vers distal (arrière).

Les matériaux employés dans sa fabrication sont indépendants de l'objet de l'invention. La longueur ou degrés d'angulation ou de courbure des pales actives et que ses surfaces soient lisses ou striées.

Elles sont également indépendantes de l'objet de cette invention. Si la courbure et longueur des pales actives est égale ou différente l'une de l'autre. La distance entre les deux pointes en position fermée.

La longueur et degré d'angulation de la première partie de la partie active (3).

Les variations des parties passives et charnière et tous les détails accessoires qui puissent se présenter et qui n'affectent pas à son essentialité.

## Revendications

1. Forceps-élévateur dentaire pour les dernières molaires supérieures ou ses restes, comprenant une partie active qui consiste en deux branches angulées ou courbées (3) a la suite d'une charnière (2), qui se contreangulent en deux pales actives (4), avec une section semi-lunaire avec les bords fins ou arrêtes vers l'intérieur et l'extérieur et avec deux faces arrondies lisses ou striées qui sont une antérieure convexe et une postérieure concave, pour diriger la dernière molaire vers l'arrière; cette section va en diminution en forme conoïde jusqu'à finir en deux pointes, a la fois qu'elles se courbent progressivement en forme circulaire ou elliptique, s'éloignant d'abord et convergeant après l'une vers l'autre, donnant l'image d'une paire de cornes de taureau dans la position fermée du forceps.

2. Forceps-élévateur, selon la revendication antérieure, **caractérisé en ce que**, dans un mode de réalisation alternatif les parties passives ou manche (1) présentent une courbature qui remplace la forme de baïonnette de la partie active (3), nécessaire pour atteindre le fond de la bouche, les pales actives (4) naissant dans ce cas directement de la charnière, à partir de laquelle elles présentent une courbure.

## Patentansprüche

1. Zahnhebezange für die letzten oberen Backenzähne oder deren Reste, mit einem aktiven Teil, der aus zwei abgewinkelten oder bogenförmigen Schäften (3) hinter einem entgegengesetzt abgewinkelten Scharnier (2) an zwei aktiven Schäften (4) besteht, mit einem halbmondförmigen Querschnitt mit feinen Rändern oder Kanten nach innen und außen und mit zwei abgerundeten glatten oder geriffelten Seiten, von denen die Vordere konvex und die Hintere konkav ausgebildet ist, um den letzten Backenzahn nach hinten auszurichten; dieser Querschnitt nimmt kegelförmig ab und endet schließlich in zwei Spitzen, die gleichzeitig fortlaufend einen kreis- oder ellipsenförmigen Bogen bilden, wobei sie zuerst auseinander- und anschließend zusammenlaufen, wodurch sie in der geschlossenen Position der Zange das Aussehen eines Paar Stierhörners aufweisen.

2. Hebezange nach dem vorhergehenden Anspruch, **dadurch gekennzeichnet, dass** die passiven Teile oder Griffe (1) in einer alternativen Ausführung eine Krümmung aufweisen, die die Bajonettform des aktiven Teils (3) ersetzt, was notwendig ist, um den hinteren Bereich des Munds zu erreichen, wobei die aktiven Schäfte (4) in diesem Fall direkt von dem Scharnier ausgehen, von dem aus sie eine Krümmung aufweisen.

## Claims

1. A dental forceps-elevator for the last upper molars or the remains thereof, comprising an active part consisting in two angled or curved branches (3) after a hinge (2) which are counter-angled in two active blades (4), with a semilunar section with narrow edges inwards and outwards and with two smooth or striated rounded sides which are a front convex side and a rear concave side in order to direct the last molar backwards; this section becomes smaller in a cone shape until ending in two sharp ends, at the same time as they progressively curve in a circular or elliptic manner, first separating and then converging towards one another, with a cowhorn appearance in the closed position of the forceps.

2. A forceps-elevator, according to the previous claim, **characterised in that** in an alternative embodiment the passive parts or handles (1) have a curvature which replaces the bayonet shape of the active part (3), which is necessary to reach the back of the mouth, the active blades (4) starting **in that** case directly from the hinge, from where they start to curve.
